# EUROPEAN PATENT APPLICATION

(11) **EP 2 306 613 A1**
(43) Date of publication of application: **06.04.2011**
(21) Application number: 09012530.3
(22) Date of filing: 02.10.2009
(51) Int. Cl.: H02J 7/35, G07F 9/10

(54) **Power-saving solar power supply system for automatic vending machine**

(71) Applicant: International Currency Technologies Corporation, Taipei, Taiwan (TW)
(72) Inventor: The designation of the inventor has not yet been filed
(74) Representative: Glawe, Delfs, Moll

(57) **Abstract**

A power-saving solar power supply system used in an automatic vending machine is disclosed to include a power supply module having a solar cell set and a rechargeable battery set, and a power management unit, which comprises a microprocessor, a voltage detection device that detects the voltage level of the solar cell set and the rechargeable battery set, an idle power supply module and a power switching module controllable by the microprocessor to switch between the solar cell set and the rechargeable battery set so that the idle power supply module provides battery power supply from the solar cell set or the rechargeable battery set to the recognition system of the automatic vending machine when the recognition system is in the idle mode, thereby saving power consumption.

## Description

### BACKGROUND OF THE INVENTION

### 1. Field of the Invention:

The present invention relates to a power supply system for an automatic vending machine and more particularly, to a power-saving solar power supply system for automatic vending machine, which provides the necessary working power to the recognition system of the automatic vending machine when the recognition system is in the idle mode so that the automatic vending machine needs not to start up its power supply system during the idle mode, saving power consumption.

### 2. Description of the Related Art:

Following fast progress of social civilization and fast development of modern technology, the pace of life has been accelerating, and people in city are busy. In consequence, automatic vending machines are intensively used and installed in public places to sell different products or to provide different services, bringing convenience to people and saving much the labor cost.

Regular automatic vending machines are used to sell different products 24 hours a day without serviceman. These automatic vending machines are highly invited for the advantage of saving much labor and bringing convenience to people. However, an automatic vending machine consumes much power supply when started up. To save power consumption, an automatic vending machine may provide an idle mode. An automatic vending machine with a power-saving idle mode reduces the consumption of power of its motor drive and recognition system. Normally, an automatic vending machine with a power-saving idle mode can save power consumption about 34%. Many countries have established regulations to rule power consumption. European Union defines a EuP's ecological profile that consists of the measurable physical inputs and outputs (such as materials, emissions and waste) over the product's entire life cycle. The EuP directive provides the legislative criteria and framework for the move to life cycle ecodesign.

There are automatic vending machine providers install a power management unit in each automatic vending machine they provide. The power management unit provides power management or switches the automatic vending machine to an idle mode or off mode when the main function of the automatic vending machine is not started or the recognition system of the automatic vending machine does to provide its service, thereby saving power consumption. During the idle mode, the power consumption is below 0.5W. The internal rechargeable battery of the automatic vending machine can satisfy the power consumption when the recognition system is in the idle mode. However, the power of a battery used in an automatic vending machine will be used up within a certain length of time The automatic vending machine business operator must send people to check the power level of the battery of each installed automatic vending machine regularly and to replace the battery of which the power is low. This automatic vending machine business operating manner greatly increases the labor cost.

Therefore, it is desirable to provide a green power supply system that is practical for use in any of a variety of existing automatic vending machines, saving the consumption of power.

### SUMMARY OF THE INVENTION

The present invention has been accomplished under the circumstances in view. It is therefore the main object of the present invention to provide a power-saving solar power supply system for automatic vending machine, which saves power consumption and assures normal functioning of the automatic vending machine.

To achieve this and other objects of the present invention, a power-saving solar power supply system for automatic vending machine comprises a power supply module having a solar cell set and a rechargeable battery set, and a power management unit. The power management unit comprises a microprocessor, a voltage detection device controllable by the microprocessor to detect the voltage level of the solar cell set and the rechargeable battery set, a power switching module controllable by the microprocessor to alternatively switch between the solar cell set and the rechargeable battery set subject to the detection result of the voltage detection device, an idle power supply module electrically connected to the recognition system of the automatic vending machine and controllable by the microprocessor through the power switching module to provide battery power supply from one the solar cell set and the rechargeable battery set to the recognition system subject to the detection result of the voltage detection device, a sleep/wakeup switch controllable by the microprocessor to switch the idle power supply module between a sleep mode and a wakeup mode, and a charging control module controllable by the microprocessor to charge the rechargeable battery set with the solar cell set.

### BRIEF DESCRIPTION OF THE DRAWINGS

FIG. 1 is a system block diagram of a power-saving solar power supply system for automatic vending machine in accordance with the present invention.
FIG. 2 is a sleep/wakeup operation flow chart of the present invention.
FIG. 3 is a power switching flow chart of the present invention.
FIG. 4 is schematic drawing showing the outer appearance of an automatic vending machine equipped with a power-saving solar power supply system in accordance with the present invention.

### DETAILED DESCRIPTION OF THE PREFERRED EMBODIMENT

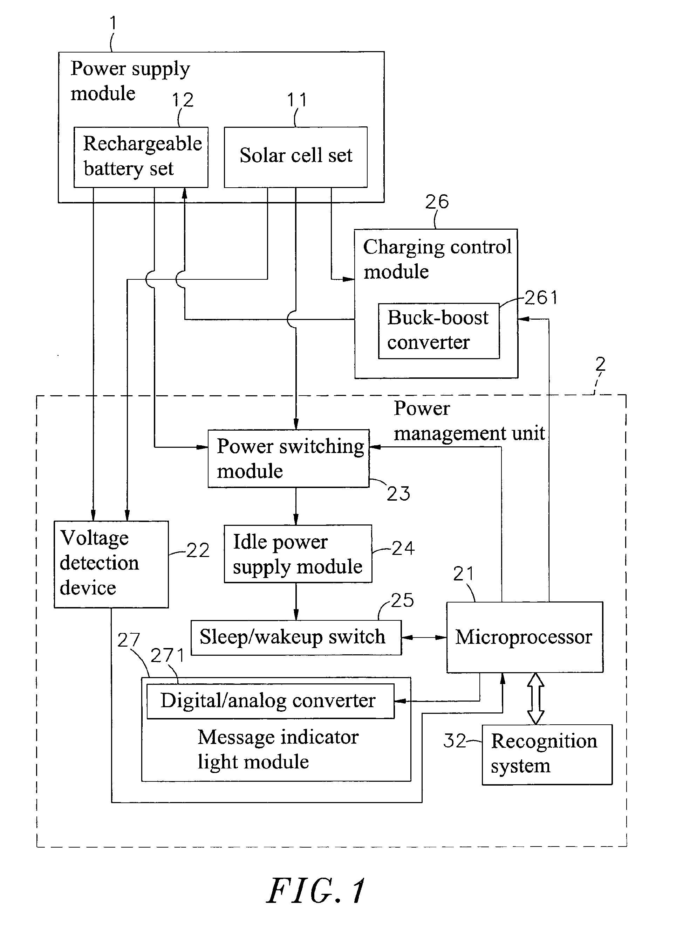

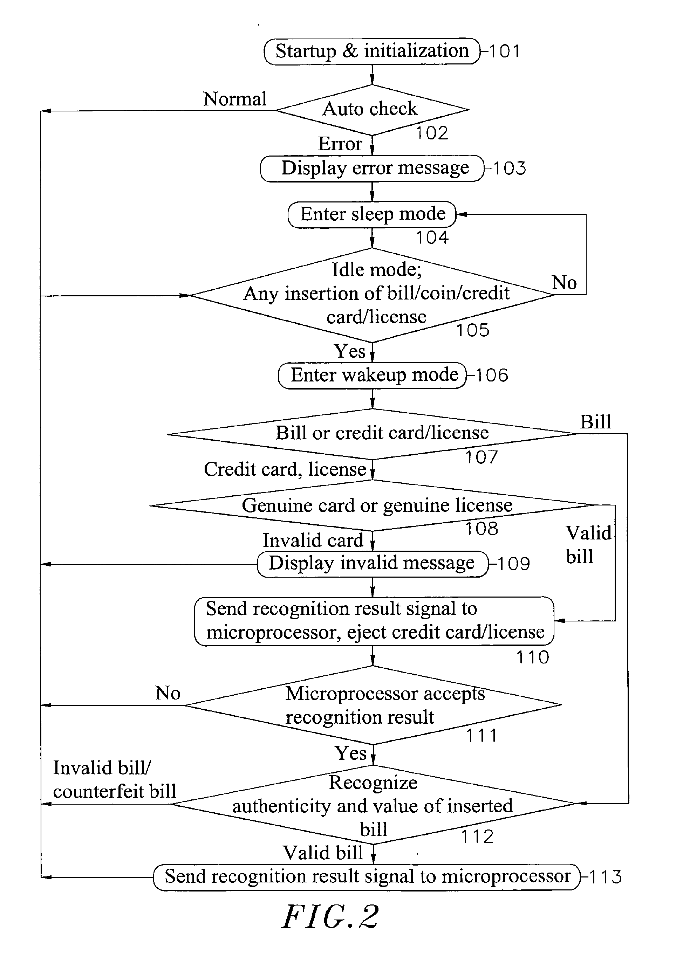

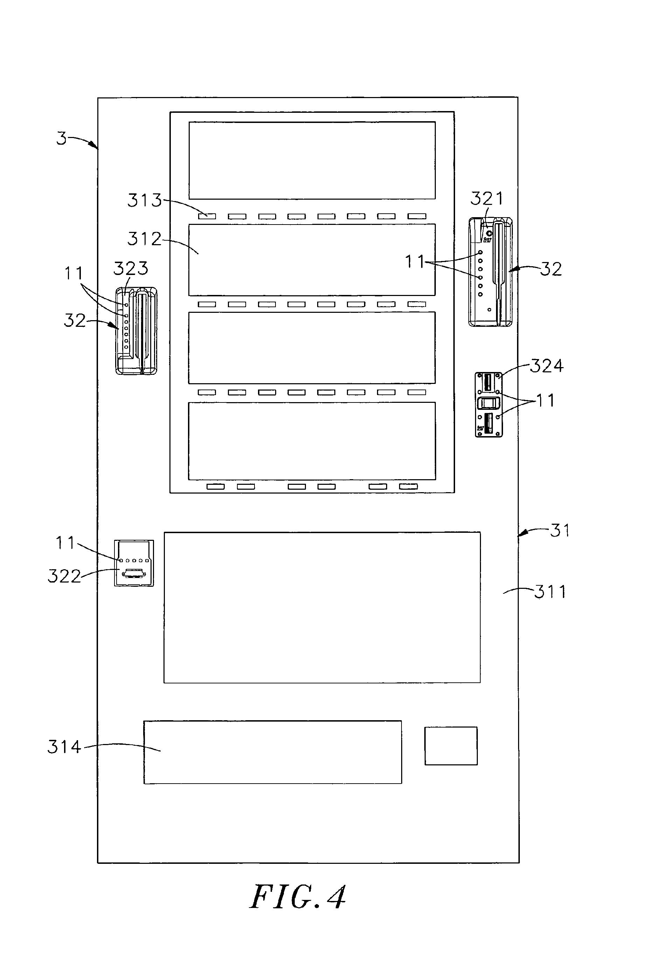

Referring to FIGS. 1-4, a power-saving solar power supply system for automatic vending machine in accordance with the present invention is shown installed in an automatic vending machine **3,** comprising a power supply module **1** and a power management unit **2.**

The power supply module **1** comprises a solar cell set **11** and a rechargeable battery set **12.** The solar cell set **11** comprises a plurality of solar cells arranged in an array. The solar cells can be solar cell lamps or solar cell SMDs (Surface Mounted Devices). One single piece of solar cell lamp provides 0.95V, 4mA. One sinle piece of solar cell SMD provides 0.95V, 10mA.

The power management unit **2** comprises a microprocessor **21,** a voltage detection device **22** electrically connected to the microprocessor **21** and adapted to detect the voltage of the solar cell set **11** and the rechargeable battery set **12,** a power switching module **23,** which is electrically connected to the solar cell set **11** and the rechargeable battery set **12** and controllable by the microprocessor **21** to alternatively switch between the solar cell set **11** and the rechargeable battery set **12,** an idle power supply module **24,** which is electrically connected to the recognition system **32** of the automatic vending machine **3** and controllable by the microprocessor **21** through the power switching module **23** to provide battery power supply from the solar cell set **11** or the rechargeable battery set **12** to the recognition system **32** of the automatic vending machine **3,** a sleep/wakeup switch **25** electrically connected to the idle power supply module **24** and controllable by the microprocessor **21** to switch the idle power supply module **24** between a sleep mode and a wakeup mode, a charging control module **26,** which comprises a buck-boost converter **261** electrically connected in series between the solar cell set **11** and the rechargeable battery set **12** and controllable by the microprocessor **21** to raise or lower the voltage of the output power of the solar cell set **11** for charging the rechargeable battery set **12,** and a message indicator light module **27** that comprises a digital/analog converter **271** electrically connected to the microprocessor **21** and controllable by the microprocessor **21** to provide different visual indications.

The automatic vending machine **3** comprises a housing **31** and a recognition system **32** mounted in the housing **31** and electrically connected to the microprocessor **21** of the power management unit **2.** The housing **31** has a motor drive (not shown) mounted therein, a face panel **311** located on the front side, multiple merchandise exhibition compartments **312** defined in the face panel **311** at different elevations, a plurality of buttons **313** arranged on the face panel **311** corresponding to the merchandise exhibition compartments **312,** and a merchandise takeout outlet **314** formed in the face panel **311** near the bottom side. The recognition system **32** comprises a card-sliding unit **321,** a bill acceptor **322,** a license recognition unit **323** and a coin slot unit **324** respectively exposed to the outside of the face panel **311.** When a user wishes to purchase merchandise from the automatic vending machine **3,** the user must insert a license into the card-sliding unit **321** or the license recognition unit **323** for recognition. The user can insert a bill into the bill acceptor **322** or a coin into the coin slot unit **324** only after his (her) license has been recognized and approved. After receipt of a bill or coin, the microprocessor **21** drives the motor drive in the housing **31** to dispense the selected age-controlled merchandise to the merchandise takeout outlet **314,** finishing the transaction. Thus, the automatic vending machine **3** can sell controlled merchandise and can prohibit unqualified people to purchase controlled merchandise.

When starting up the recognition function, the system runs subject to the following steps:
(101) Start up initialization;
(102) Run auto check, and then proceed to step (103) when error, or step (105) when normal;
(103) Display error message;
(104) Enter sleep mode;
(105) Enter idle mode and simultaneously detect any insertion of a bill, coin, credit card or license within a predetermined time period, and then repeat step (104) when negative, or proceed to step (106) when positive;
(106) Enter wakeup mode;
(107) Determine whether a bill or a credit card/license is inserted, and then proceed to step (108) when a credit card/license is inserted, or step (112) when a bill is inserted;
(108) Recognize the inserted credit card/license is a true card or license, and then proceed to step (109) if the credit card/license is a false card or false license, or step (110) if the credit card/license is a true card or true license;
(109) Display the message of invalid card/license, and then return to step (105);
(110) Provide a recognition result signal to the microprocessor **21** and eject the inserted credit card/license;
(111) Wait for instruction from the microprocessor **21** whether or not to accept the recognition result, and then return to step
(105) when negative, or proceed to step (112) when positive; (112) Recognize the authenticity and face value of the inserted bill, and then return to step (105) if the inserted bill is a counterfeit, or proceed to step (113) if the bill is a true bill; (113) Send a recognition result signal to the microprocessor **21** and then return to step (105).

As stated above, after startup of the automatic vending machine **3,** the microprocessor **21** runs initialization to set firmware parameters and to check any error automatically. When an error is found, the microprocessor **21** controls the message indicator light module **27** to give a corresponding visual indication by means of turning on a corresponding color light or flashing one light subject to a predetermined frequency. At the same time, the microprocessor **21** controls the sleep/wakeup switch **25** to switch the recognition system **32** to the sleep mode. When normal, the recognition system **32** enters the idle mode, and the microprocessor **21** controls the power switching module **23** to switch to the solar cell set **11** or the rechargeable battery set **12** subject to voltage detection result and to further provide power supply to the recognition system **32** via the idle power supply module **24.** During the idle mode, the recognition system **32** detects any insertion of a bill, coin, credit card or license within a predetermined time period, and then enters the sleep mode after a predetermined time period when no any insertion is detected. When an insertion is detected, the user must insert a credit card or license into the card-sliding unit **321** or the license recognition unit **323** at first. After the inserted credit card or license has passed the verification and has been ejected, it is necessary to wait for the decision of the microprocessor **21** whether or not to accept the recognition result. When the microprocessor **21** accepts the recognition result, the automatic vending machine **3** immediately enters the wakeup mode, thereby turning on the power supply for the bill acceptor **322** and the coin slot unit **324** for the insertion of a bill or coin. When a bill is inserted into the bill acceptor **322,** the bill acceptor recognizes the authenticity and value of the inserted bill. If the inserted bill or coin is a counterfeit, the microprocessor **21** controls the message indicator light module **27** to give a visual signal indicative of an invalid message and then drives the recognition system **32** into the sleep mode. Therefore, when the automatic vending machine **3** is in the idle mode, the power supply is not started up to run merchandise selling operation. At this time, the idle power supply module **24** provides the necessary working voltage to the recognition system **32** to scan any insertion of a bill, coin, credit card or license. By means of the solar cell set **11** or rechargeable battery set **1** of the solar cell power supply module **1,** the recognition system **32** can obtain sufficient power supply required during its idle mode, saving power consumption for the motor drive, lighting fixture and peripheral devices of the recognition system **32.** Therefore, the invention effectively saves power consumption, lowering management cost.

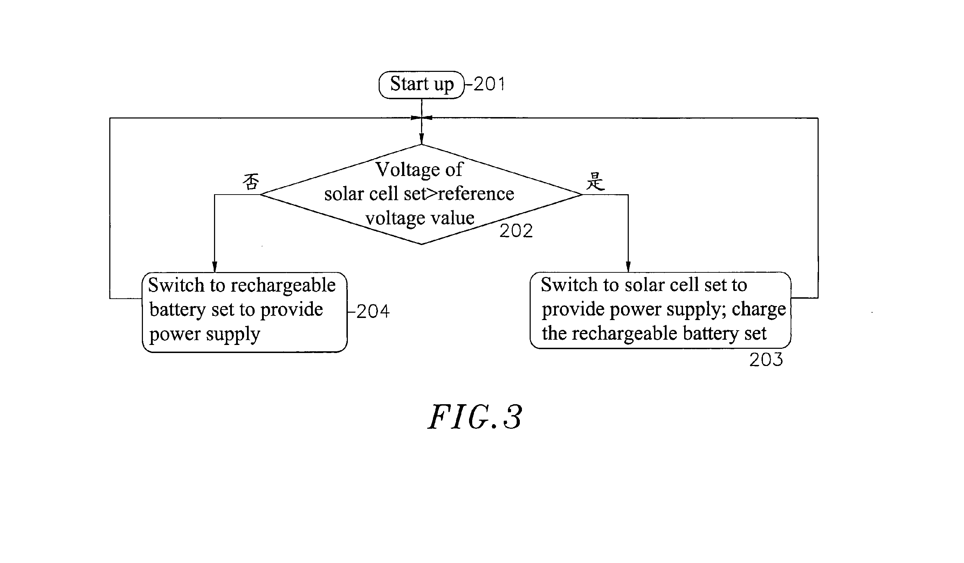

Further, when entering the idle mode, the power supply switching operation runs subject to the following steps (as shown in FIG. 3):
(201) Start up;
(202) Detect whether or not the voltage of the solar cell set **11** is over a predetermined reference voltage value? And then proceed to step (203) when over the predetermined reference voltage value, or step (204) when below the predetermined reference voltage value;
(203) Switch to the solar cell set **11** to obtain the necessary working voltage from the solar cell set **11** to let the rechargeable battery set **12** to be charged with the power supply from the solar cell set **11,** and then return to step (202);
(204) Switch to the rechargeable battery set **12** to obtain the necessary working voltage from the rechargeable battery set **12,** and then return to step (202).

It is to be understood that when the power supply module **1** and the power management unit **2** are started up, the voltage detection device **22** detects the voltage level of the solar cell set **11** and compared the detected voltage to a predetermined reference voltage value. The microprocessor **21** decides whether or nor to let the solar cell set **11** output its power supply subject to the detection result from the voltage detection device **22.** If the voltage of the solar cell set **11** surpasses the predetermined reference voltage value, the microprocessor **21** gives a signal to the power switching module **23,** causing the power switching module **23** to switch on the connection between the solar cell set **11** and the idle power supply module **24** and to simultaneously switch off the connection between the rechargeable battery set **12** and the idle power supply module **24,** enabling the power supply to be supplied from the solar cell set **11** to the sleep/wakeup switch **25,** the microprocessor **21** and the recognition system **32** of the automatic vending machine **3.** At this time, the microprocessor **21** gives a signal to the charging control module **26,** causing the charging control module **26** to charge the rechargeable battery set **12** with the solar cell set **11.** If the voltage of the solar cell set **11** is below the predetermined reference voltage value, the power switching module **23** switches off the connection between the solar cell set **11** and the idle power supply module **24** and simultaneously switch on the connection between the rechargeable battery set **12** and the idle power supply module **24,** enabling the power supply to be supplied from the rechargeable battery set **12** to the sleep/wakeup switch **25,** the microprocessor **21** and the recognition system **32** of the automatic vending machine **3.** Further, it the vending machine **3** has a rechargeable power supply unit set therein, the aforesaid rechargeable battery set can be eliminated. In this case, the rechargeable power supply unit of the automatic vending machine **3** is electrically connected to the power switching module **23** and voltage detection device **22** of the power management unit **2,** i.e., the rechargeable power supply unit of the automatic vending machine **3** is used to substitute for the aforesaid rechargeable battery set **12** such that the rechargeable power supply unit of the automatic vending machine **3** and the solar cell set **11** can be alternatively selected to provide the recognition system **32** with the necessary working voltage. Further, during normal working of the power supply module **1** or when the detected battery voltage is below the predetermined reference voltage value, the microprocessor **21** receives a detection result signal from the voltage detection device **22** and then controls the message indicator light module **27** to give a corresponding visual indication signal, indicating the message of "normal" or "voltage low".

It is to be understood that the above disclosure simply explains an example of the present invention but not intended as a limitation of the spirit of the scope of the invention. The rated voltage of the solar cell set **11** and the rechargeable battery set **12** can be 2.8V, 3.4V, 3.8V or the like. Further, the rated voltage can be changed subject to actual requirements. The voltage range of the solar cell set **11** detectable by the voltage detection device **22** can be within 2.7V∼3.6V. Preferably, the rated voltage can be 3.8V, and the reference voltage value can be 3.6V. When the voltage of the solar cell set **11** is below 3.6V, the solar cell set **11** is stopped from outputting power supply, and the rechargeable battery set **12** is switched on to output power supply. Further, the solar cell set **11** can be comprised of an array of solar cell lamps or solar cell SMDs (Surface Mounted Devices) arranged inside the housing **31** of the automatic vending machine **3** or on the outside of the recognition system **32.** Further, the face panel **311** can be wholly or partially made from transparent or translucent glass or acrylic so that the solar cell set **12** can be radiated by sunlight and convert solar energy into electricity for charging the rechargeable battery set **12** or supplying to the recognition system **32** during the idle mode subject to the control of the power switching module **23,** thereby assuring continuous detection and normal working of the microprocessor **21** and avoiding the automatic vending machine to start up the power supply for merchandise selling operation. Therefore, the invention greatly saves power consumption during the idle mode.

A prototype of power-saving solar power supply system for automatic vending machine has been constructed with the features of FIGS. 1-4. The power-saving solar power supply system for automatic vending machine functions smoothly to provide all of the features disclosed earlier.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A power-saving solar power supply system used in an automatic vending machine having a recognition system for verifying a bill, coin, credit card or license inserted by a user into said automatic vending machine, comprising:
a power supply module, said power supply module comprising a solar cell set and a rechargeable battery set, said solar cell set comprising a plurality of solar cells mounted in said automatic vending machine for receiving sunlight and converting sunlight into electricity; and
a power management unit, said power management unit comprising a microprocessor, a voltage detection device controllable by said microprocessor to detect the voltage level of said solar cell set and said rechargeable battery set, a power switching module controllable by said microprocessor to alternatively switch between said solar cell set and said rechargeable battery set subject to the detection result of said voltage detection device, an idle power supply module electrically connected to said recognition system of said automatic vending machine and controllable by said microprocessor through said power switching module to provide battery power supply from one of said solar cell set and said rechargeable battery set to said recognition system, a sleep/wakeup switch controllable by said microprocessor to switch said idle power supply module between a sleep mode and a wakeup mode, and a charging control module controllable by said microprocessor to charge said rechargeable battery set with said solar cell set.

2. The power-saving solar power supply system as claimed in claim 1, wherein said solar cell set is mounted in said automatic vending machine behind a light penetrable face panel of said automatic vending machine outside said recognition system and controllable by said microprocessor to charge said rechargeable battery set and to provide the necessary working power supply to said recognition system when said recognition system is in the idle mode.

3. The power-saving solar power supply system as claimed in claim 1, wherein said solar cell set is comprised of an array of solar cell lamps.

4. The power-saving solar power supply system as claimed in claim 3, wherein, each said solar cell lamp provides electricity of 0.9V and 4mA.

5. The power-saving solar power supply system as claimed in claim 1, wherein said solar cell set is comprised of an array of solar cell SMDs (Surface Mounted Devices),

6. The power-saving solar power supply system as claimed in claim 5, wherein each said solar cell SMD provides electricity of 0.95V and 10mA.

7. The power-saving solar power supply system as claimed in claim 1, wherein said rechargeable battery set is an internal storage battery power supply unit of said automatic vending machine.

8. The power-saving solar power supply system as claimed in claim 1, wherein said charging control module comprises a buck-boost converter electrically connected in series between said solar cell set and said rechargeable battery set and controllable by said microprocessor to raise/lower the voltage of the output power of said solar cell set for charging said rechargeable battery set.

9. The power-saving solar power supply system as claimed in claim 1, wherein said power management unit further comprises a message indicator light module, said message indicator light module comprising a digital/analog converter electrically connected to said microprocessor and controllable by said microprocessor to provide one of a normal visual indication and a low voltage visual indication.

10. The power-saving solar power supply system as claimed in claim 1, wherein said voltage detection device detects the voltage level of said solar cell set and outputs a signal indicative of the detection result to said microprocessor; said microprocessor compares the voltage level detected by said voltage detection device to a predetermined reference voltage value and then drives said power switching module to switch on the connection between said solar cell set and said idle power supply module and to switch off the connection between said rechargeable battery set and said idle power supply module for enabling said idle power supply module to provide battery power supply from said solar cell set to said sleep/wakeup switch and said recognition system when the voltage level detected by said voltage detection device surpasses said predetermined reference voltage value and drives said charging control module to charge said rechargeable battery set with the battery power supply from said solar cell set; said microprocessor controls said power switching module to switch off the connection between said solar cell set and said idle power supply module and to switch on the connection between said rechargeable battery set and said idle power supply module for enabling said idle power supply module to provide battery power supply from said rechargeable battery set to said sleep/wakeup switch and said recognition system when the voltage level detected by said voltage detection device is below said predetermined reference voltage value.

11. The power-saving solar power supply system as claimed in claim 10, wherein said reference voltage value is 3.6V.

12. The power-saving solar power supply system as claimed in claim 10, wherein said reference voltage value is within 2.7V∼3.6V.
